# FASCICULE DE BREVET EUROPEEN

(11) **EP 0 468 871 B1**
(45) Date de publication et mention de la délivrance du brevet: **19.04.1995**
(21) Numéro de dépôt: 91402031.8
(22) Date de dépôt: 22.07.1991
(51) Int. Cl.: G21C 3/322, G21C 3/356

(54) **Grille à ailettes de mélange pour assemblage combustible nucléaire**
Abstandshalter mit Mischfahnen für Kernbrennstabbündel
Grid comprising mixing vanes for nuclear fuel assembly

(30) Priorité: 24.07.1990 FR 9009446
(43) Date de publication de la demande: 29.01.1992
(73) Titulaire: FRAMATOME, 92400 Courbevoie (FR); COMPAGNIE GENERALE DES MATIERES NUCLEAIRES (COGEMA), 78141 Vélizy-Villacoublay (FR)
(72) Inventeur: Verdier, Michel, F-69100 Villeurbanne (FR)
(74) Mandataire: Fort, Jacques

(56) Documents cités:
- EP-A- 0 148 452
- EP-A- 0 378 094
- FR-A- 2 457 544
- US-A- 3 933 584

## Description

La présente invention a pour objet une grille à ailettes de mélange pour assemblage combustible nucléaire, ayant notamment pour fonction d'améliorer le mélange des filets de réfrigérant en circulation ascendante dans l'assemblage et d'homogénéiser la température au sein de l'assemblage.

Elle concerne plus particulièrement les grilles de mélange du type comprenant au moins deux jeux de plaquettes entrecroisées et fixées à leurs points de croisement, délimitant des cellules destinées à être traversées les unes par des crayons de combustible et les autres par des tubes guides, munies d'ailettes de brassage du réfrigérant prolongeant les plaquettes vers l'aval et orientées de façon à dévier le réfrigérant transversalement à sa direction générale d'écoulement, chaque plaquette étant munie de moyens de butée en saillie vers l'intérieur à partir de chacune des faces des cellules destinées à recevoir des crayons de combustible.

L'invention trouve une application particulièrement importante dans les assemblages combustibles dont la structure de support comporte des tubes guides reliant deux embouts et, en plus de grilles de mélange du genre ci-dessus quine participent pas au supportage des crayons (c'est-à-dire à leur maintien vertical) au moins une grille supplémentaire portant les crayons. Cette grille est munie pour cela de ressorts, découpés dans les plaquettes ou rapportés sur les plaquettes, destinés à plaquer les crayons sur des moyens de butée constitués par des bossettes situées à l'opposé.

L'évolution des caractéristiques des réacteurs, notamment vers des taux de combustion et des performances thermohydrauliques accrus, conduit à utiliser des grilles, autres que de supportage, dont les moyens de butée délimitent un passage supérieur à la dimension des crayons, facilitant l'écoulement du réfrigérant et évitant l'endommagement de la gaine des crayons lors de leur introduction (EP-A- 0 148 452). Ce jeu est suffisamment faible pour limiter les vibrations des crayons à une amplitude inférieure à celle qui pourrait provoquer la dégradation de la gaine et le martelage des ailettes de brassage par les crayons. Une telle grille est conforme au préambule de la revendication 1.

La présente invention vise notamment à fournir une grille de ce dernier type, dans lequel les moyens de butée participent à l'homogénéisation de température au sein d'un assemblage et ce sans crééer une perte de charge excessive.

Dans ce but l'invention propose notamment une grille de mélange conforme à la partie caractérisante de la revendication 1. Le terme "interne" désigne une cellule bordée de tous les côtés par des plaquettes ; il s'applique en conséquence à toutes les cellules dans le cas d'une grille à ceinture ; il exclut les cellules de rive dans le cas d'une grille sans ceinture.

Une telle constitution est utilisable aussi bien pour des grilles de structure, participant à la tenue mécanique de l'ensemble de l'assemblage et munies d'une ceinture extérieure, ayant éventuellement une longueur dans le sens de l'écoulement supérieure à celle des autres plaquettes, que pour des grilles n'ayant qu'un rôle thermodynamique et dépourvues de ceinture.

Les moyens de butée en forme d'écope peuvent être constitués par des déformations de zones approximativement semi-circulaires des plaquettes, s'ouvrant soit sur un bord de la plaquette, soit par une fente pratiquée dans la plaquette transversalement à la direction d'écoulement. Ces écopes peuvent avoir une forme générale en demi-tronc de cône. Les deux écopes décalées dans le sens de l'écoulement du réfrigérant peuvent occuper une fraction seulement ou la quasi-totalité de la largeur de la plaquette (c'est-à-dire s'étendre ou non sur toute la hauteur de la grille).

Dans un mode avantageux de réalisation les ailettes n'intéressent chacune qu'une seule cellule de la grille (c'est-à-dire s'étendent d'un seul côté de la ligne de croisement avec une autre plaquette) et chaque plaquette comporte au plus une demi-ailette à chaque angle de cellule. Il peut alors être avantageux soit de disposer les écopes suivant une ligne parallèle au sens général d'écoulement dans l'assemblage mais en les décalant par rapport au milieu de la paroi de la cellule, soit de les disposer suivant une ligne oblique par rapport au sens général de l'écoulement. La disposition des ailettes peut dans ce cas être, par exemple, celle décrite dans le brevet français n° 84 16803 (publication n°2 572 837).

L'invention sera mieux comprise à la lecture de modes particuliers de réalisation, donnés à titre d'exemples non limitatifs. La description se réfère aux dessins qui l'accompagnent, dans lesquels :
- la figure 1 est une vue schématique en élévation montrant une répartition de grilles dans un assemblage combustible pour réacteur à eau sous pression ;
- la figure 2 est une vue schématique en plan d'un fragment d'angle de grille de structure suivant un mode particulier de réalisation de l'invention ;
- la figure 3 est une vue à grande échelle de la grille de la figure 2 en coupe suivant la ligne III-III ;
- la figure 4 est une vue en coupe suivant la ligne IV-IV de la figure 3 ;
- les figures 5 et 6, similaires aux figures 3 et 4, montrent une grille de structure limitant les débattements des crayons, suivant un autre mode de réalisation ;
- la figure 5A, similaire à la figure 5, montre une variante ;
- les figures 7 et 8, similaires aux figures 3 et 4, montrent un autre mode encore de réalisation ;
- La figure 9 est une vue en coupe à grande échelle suivant un plan parallèle à la paroi d'une cellule, montrant une constitution selon l'invention de la partie terminale d'une plaquette appartenant à une grille de mélange sans ceinture, selon un mode particulier de réalisation de l'invention ;
- les figures 10 et 11 sont respectivement une vue en coupe suivant la ligne X-X de la figure 9 et une vue dans la direction F ;
- les figures 12 et 13, similaires aux figures 9 et 10, montrent une variante de réalisation.

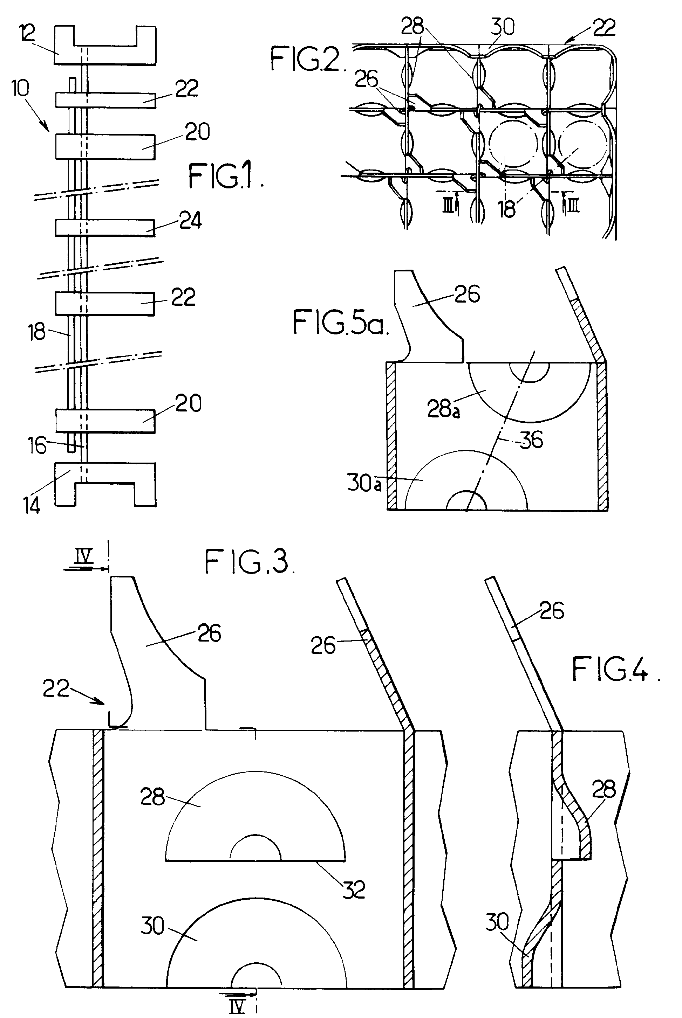

La figure 1 montre un assemblage dans lequel peuvent être utilisées des grilles selon l'invention. Cet assemblage 10 comporte une structure support ayant deux embouts ou pièces d'extrémité 12 et 14 reliés par des tubes guides 16 destinés à recevoir les crayons d'une grappe de commande non représentée. L'assemblage comporte également des crayons 18 de combustible, dont un seul est représenté. Ces crayons 18 sont maintenus aux noeuds d'un réseau régulier et supportés par des grilles. Parmi ces dernières, l'une au moins retient longitudinalement les crayons 18. Cette grille peut notamment être la grille inférieure 20 fixée aux tubes guides, munie dans ce but de ressorts d'appui des crayons contre des bossettes, découpés dans les plaquettes constituant la grille 20 ou rapportés.

Les autres grilles peuvent comporter d'une part des grilles 22 en alliage à base de zirconium comportant une ceinture, participant à la résistance mécanique de l'assemblage, d'autre part des grilles 24 n'ayant qu'une fonction thermohydraulique de brassage et de mélange du réfrigérant, d'autre part encore une grille de structure 25 retenant les crayons de combustible mais libre par rapport aux tubes guides. Les grilles 24 sont souvent de longueur plus faible que les grilles 22 et/ou démunies de ceinture. Les grilles de brassage 24 sont généralement alternées avec des grilles de structure 22 à la partie aval, c'est-à-dire à la partie haute, de l'assemblage 10.

Dans le cas d'un assemblage où les crayons de combustible 18 sont répartis aux noeuds d'un réseau carré, chaque grille 22 peut avoir la constitution générale montrée en figure 2. Une telle grille est constituée de deux jeux entrecroisés de plaquettes assemblées à mi-fer et soudées entre elles aux points de croisement. Les grilles 22, ou au moins celles des grilles qui sont le plus en aval dans le sens de l'écoulement, sont munies d'ailettes 26 de création de turbulences ou d'écoulements transversaux. Ces ailettes 26 sont avantageusement constituées de façon à n'intéresser chacune qu'une seule cellule de la grille, comme indiqué sur la figure 2 ou dans le brevet français déjà mentionné. Chaque plaquette peut par exemple être munie d'ailettes 26 toutes inclinées du même côté, réparties à intervalles égaux à deux fois la dimension d'une cellule le long d'une plaquette, s'étendant chacune à partir d'un point de croisement vers le milieu de la paroi de la cellule associée.

La ceinture 28 est en général constituée de quatre plaquettes externes assemblées, munies de languettes obliques 30 et capotées dans les angles pour éviter l'accrochage mutuel des grilles de deux assemblages adjacents lors de la mise en place d'un assemblage.

Conformément à l'invention, les cellules internes destinées à recevoir un crayon 18 comportent sur leurs quatre faces des moyens de butée en saillie vers l'intérieur, délimitant un passage supérieur à la dimension du crayon. Ces moyens sont constitués, sur chaque face séparant deux cellules internes de ce type, par deux portions en forme d'écope découpées et embouties. Dans le cas particulier illustré en figures 3 et 4, les moyens de butée ménagés dans une portion de plaquette constituant la paroi séparant deux cellules sont constitués par deux portions 28 et 30 en forme de demi-boutons, à base approximativement semi-circulaire, alignées l'une par rapport à l'autre dans le sens de circulation du réfrigérant et ayant des saillies de sens opposé, formant des écopes. Les deux écopes ont les mêmes dimensions. Leur base semi-circulaire est dirigée vers l'aval. L'écope aval 28 est délimitée par une fente 32 découpée dans la plaquette. L'écope amont 30 se termine, elle, par une partie déformée de la tranche amont de la plaquette. Comme le montre la figure 4, l'écope 28 placée en aval est en saillie dans le sens opposé à l'inclinaison de l'ailette 26 portée par la même paroi.

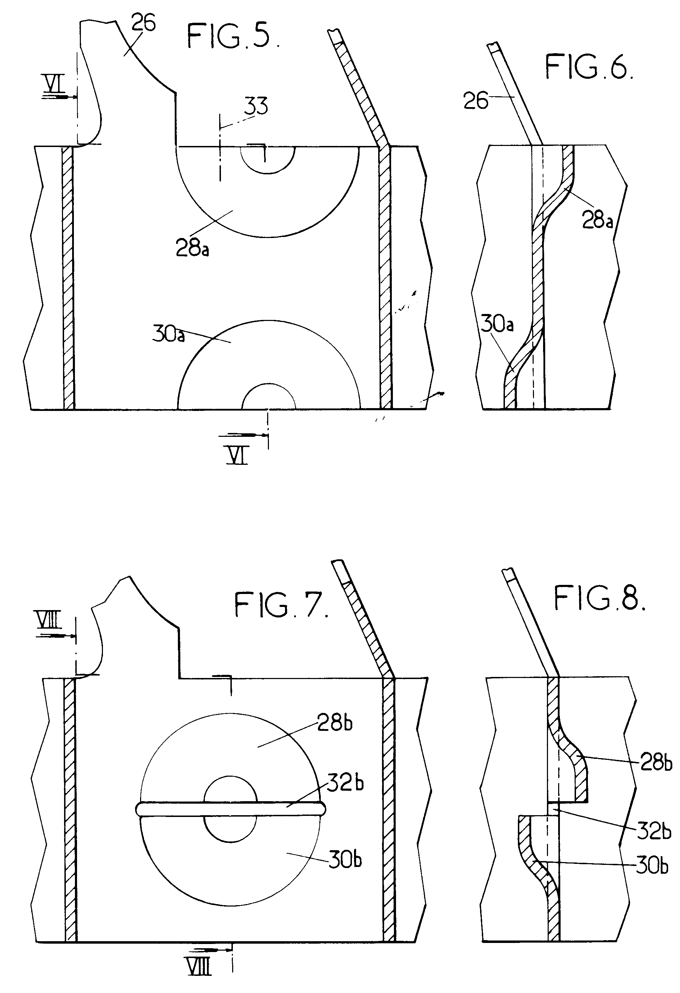

Le mode de réalisation montré en figures 5 et 6 se différencie du précédent en ce que :
- l'écope 28a placée en aval s'ouvre en sens inverse de l'écope 30a placée en amont et s'étend jusqu'à la tranche aval de la plaquette, quine comporte en conséquence pas de fente,
- les écopes 28a et 30a sont décalées par rapport à la ligne médiane 33 de la paroi, afin d'éviter que l'écope 28a n'interfère avec l'ailette 26.

Comme dans le cas précédent, l'écope 28a placée en aval fait saillie latéralement en sens opposé de l'ailette 26.

Dans la variante de réalisation montrée en figure 5A, les écopes 28a et 30a sont identiques à celles de la figure 5, mais alignées suivant une direction 36 oblique par rapport à la direction générale d'écoulement.

Dans le mode de réalisation montré en figures 7 et 8, les écopes 28b et 30b sont orientées tête bêche en sens inverse de celles illustrées sur les figures 5 et 6. Elles s'ouvrent l'une vers l'autre. Elle sont séparées par une fente 32b qui, généralement, aura une largeur plus importante que dans le cas de la figure 3.

La fente 32b, au lieu d'être orthogonale à la direction générale d'écoulement, pourrait être oblique pour donner aux écopes une disposition relative comparable à celle de la figure 5A.

Comme on l'a indiqué plus haut, l'invention est applicable également à des grilles n'ayant qu'une fonction thermohydraulique de brassage, dépourvues de ceinture. Dans ce cas, les cellules de rive peuvent être munies de moyens de butée en forme de fractions seulement d'écope.

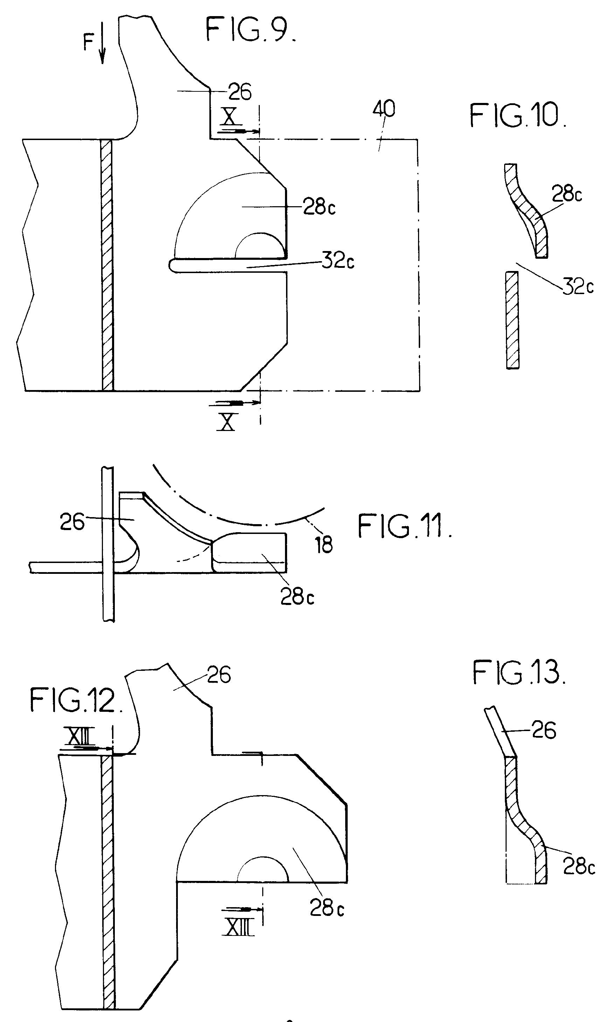

Les figures 9 à 11 montrent une constitution possible de moyens de butée utilisables sur une grille 24 n'ayant qu'une fonction thermohydraulique et dépourvue de ceinture, dont les plaquettes ne s'étendent, au-délà de la dernière plaquette qu'elles croisent, que sur une longueur inférieure à la dimension normale 40 d'une paroi de cellule interne. Ce raccourcissement des plaquettes présente l'avantage d'éviter tout accrochage entre grilles thermohydrauliques de deux assemblages adjacents, puisque l'encombrement en plan de la grille est inférieur à l'enveloppe des crayons 18.

Dans le mode de réalisation des figures 9 à 11, la partie terminale comporte une seule écope partielle 28c, présentant la même disposition que l'écope 28b des figures 7 et 8, mais décalée et tronquée par le raccourcissement de la plaquette. Cette écope est orientée dans le même sens que l'ailette 26, de façon à interdire la venue en contact du crayon 18 avec l'ailette. Il serait également possible de prévoir une seconde écope partielle, similaire à l'écope 30b des figures 7 et 8, séparée de l'écope 28c par la fente 32c. Mais dans la plupart des cas une écope dirigée à l'opposé de l'ailette n'est pas nécessaire.

Le mode de réalisation montré en figures 12 et 13 se différencie du précédent en ce que toute la partie terminale de la plaquette située au-dessous de la fente 32c est supprimée. En revanche, la plaquette est un peu plus longue que dans le cas de la figure 9, de façon que l'écope 28d constitue un demi-bouton complet.

A titre d'exemple, on peut indiquer que les écopes peuvent présenter une saillie de l'ordre de 1,1 à 1,2 mm et un diamètre à la base de l'ordre de 7 mm dans le cas de grille à fonction purement thermohydraulique de 10 mm d'épaisseur. L'écope peut avoir une forme de tronc de cône circulaire, terminé par un méplat de 1, 5 à 2 mm de diamètre.

## Revendications

1. Grille de mélange pour assemblage combustible nucléaire, comprenant au moins deux jeux de plaquettes entrecroisées et fixées à leurs points de croisement, délimitant des cellules destinées à être traversées les unes par des crayons de combustible et les autres par des tubes guides, munies d'ailettes (26) de brassage du réfrigérant prolongeant les plaquettes vers l'aval et orientées de façon a dévier le réfrigérant transversalement a sa direction générale d'écoulement, chaque plaquette étant munie de moyens de butée en saillie vers l'intérieur a partir de chacune des faces des cellules destinées à recevoir des crayons de combustible, délimitant un passage supérieur à la dimension des crayons mais suffisamment faible pour interdire au crayon contenu dans la cellule de venir en contact avec les ailettes, les moyens de butée comportant, dans chaque paroi séparant deux cellules internes occupées par des crayons de combustible, deux portions de plaquette découpées et déformées, décalées l'une par rapport à l'autre dans le sens de circulation du réfrigérant, dont les saillies sont de sens opposées, caractérisée en ce que ces portions sont en forme d'écope (28,28a,28b,28c), et ouvertes d'un seul côté axial pour tendre à faire passer du réfrigérant d'une des cellules à l'autre.

2. Grille selon la revendication 1, caractérisée en ce que les moyens de butée en forme d'écope sont constitués par des déformations de zone approximativement semi-circulaires des plaquettes, s'ouvrant soit sur un bord de la plaquette, soit par une fente pratiquée dans la plaquette transversalement à la direction d'écoulement.

3. Grille selon la revendication 2, caractérisée en ce que les écopes ont une forme générale en demi-tronc de cône.

4. Grille selon l'une quelconque des revendications précédentes, caractérisée en ce que les écopes décalées dans le sens de l'écoulement du réfrigérant occupent une fraction seulement de la largeur de la plaquette.

5. Grille selon l'une quelconque des revendications 1 à 4, caractérisée en ce que les deux écopes (28,30) ont une base semi-circulaire à l'aval et en ce que l'écope aval est délimitée par une fente (32) découpée dans la plaquette tandis que l'écope amont (30) se termine par une partie déformée de la tranche amont de la plaquette, l'écope aval (28) étant en saillie par rapport à la plaquette dans le sens opposé à l'inclinaison de l'ailette (26) portée par la même paroi de cellule.

6. Grille selon l'une quelconque des revendications 1 à 5, caractérisée en ce que l'écope (28a) placée en aval s'ouvre en sens inverse de l'écope (30a) placée en amont et s'étend jusqu'à la tranche aval de la plaquette, l'écope aval étant en saillie par rapport à la plaquette dans le sens opposé à l'inclinaison de l'ailette (26) portée par la même paroi de cellule.

7. Grille selon l'une quelconque des revendications 1 à 5, caractérisée en ce que les deux écopes (28b,30b) s'ouvrent face à face et sont séparées par une fente (32b).

8. Grille selon l'une quelconque des revendications précédentes, caractérisée en ce qu'elle est dépourvue de ceinture, en ce que les plaquettes ont une longueur telle que leur encombrement est inférieur à l'enveloppe des crayons de combustible dans l'assemblage et en ce que les parois séparant des cellules de rive comportent des moyens de butée (28c,28d) en saillie du côté de la plaquette vers lequel est inclinée l'ailette (26) de la cellule correspondante.

## Patentansprüche

1. Verwirbelungsgitter für Kernbrennelementkassetten mit mindestens zwei Sätzen gekreuzter Stege, die an ihren Kreuzungspunkten miteinander befestigt sind und Zellen eingrenzen, die dazu bestimmt sind, einerseits von Brennstäben durchkreuzt zu werden und andererseits von Führungsrohren, wobei die Stege mit Flügeln (26) zur Verwirbelung des Kühlmittels versehen sind, die die Stege stromab verlängern die so orientiert sind, daß sie das Kühlmittel quer zu seiner allgemeinen Flußrichtung umleiten, wobei jeder Steg mit Anschlägen versehen ist, die ausgehend von jeder Seite der Zellen, die dazu bestimmt sind, Brennstäbe aufzunehmen, nach innen vorspringen und die eine Durchgangsöffnung eingrenzen, die größer als die Abmessung der Brennstäbe ist, die jedoch hinreichend klein ist, um zu verhindern, daß der in der Zelle enthaltene Brennstab in Kontakt mit den Flügeln gerät, wobei die Anschlagmittel in jeder Zwischenwand, die zwei innere Zellen voneinander trennt, die mit Brennstäben bestückt sind, zwei ausgeschnittene und verformte Stegteile aufweisen, die zueinander in Fließrichtung des Kühlmittels versetzt sind und deren Vorsprünge in entgegengesetzte Richtung zeigen,
**dadurch gekennnzeichnet**, daß
diese Bereiche die Form eines Schöpflöffels (28, 28a, 28b, 28c) haben und zu einer einzigen axialen Seite offen sind, um das Kühlmittel von einer der Zellen in eine andere zu leiten.

2. Gitter nach Anspruch 1, dadurch gekennzeichnet, daß die schöpflöffelförmigen Anschlagsmittel aus Verformungen eines näherungsweise halbkreisförmigen Bereichs der Stege gebildet sind und sich entweder zum Rand des Steges öffnen oder durch einen Schlitz, der in dem Steg quer zur Flußrichtung angebracht ist.

3. Gitter nach Anspruch 2, dadurch gekennzeichnet, daß die Schöpflöffel in wesentlichen die Form eines halben Kegelstumpfes aufweist.

4. Gitter nach einem der vorstehenden Ansprüche, dadurch gekennzeichnet, daß die in Flußrichtung des Kühlmittels versetzt angeordneten Schöpflöffel nur einen Teil der Breite der Stege einnehmen.

5. Gitter nach einem der vorstehenden Ansprüche 1 bis 4, dadurch gekennzeichnet, daß die beiden Schöpflöffel (28, 30) eine halbkreisförmige Basis stromab aufweisen und dadurch, daß der stromab gelegene Schöpflöffel durch einen Schlitz (32) begrenzt ist, der in dem Steg eingeschnitten ist, während der stromauf gelegene Schöpflöffel (30) in einem verformten Bereich des Stegs endet, wobei der stromab gelegene Schöpflöffel (28) gegenüber dem Steg in einer Richtung vorsteht, die entgegengesetzt zu der Neigung des Flügels (26) ist, der von derselben Wand der Zelle getragen wird.

6. Gitter nach einem der Ansprüche 1 bis 5, dadurch gekennzeichnet, daß der Schöpflöffel (28a), der stromab gelegen ist, sich in umgekehrter Richtung gegenüber dem Schöpflöffel (30a) öffnet, der stromauf angeordnet ist und sich bis zum stromab gelegenen Teil des Stegs erstreckt, wobei der stromab gelegene Schöpflöffel bezüglich des Stegs in der entgegengesetzten Richtung vorsteht wie die Neigung des Flügels (26), der von derselben Wand der Zelle getragen wird.

7. Gitter nach einem der Ansprüche 1 bis 5, dadurch gekennzeichnet, daß die beiden Schöpflöffel (28b, 30b) sich einander gegenüber öffnen und durch einen Schlitz (32b) getrennt sind.

8. Gitter nach einem der vorstehenden Ansprüche, dadurch gekennzeichnet, daß es keinen Gurt aufweist und die Stege eine Länge haben, derart, daß ihre Ausmaße kleiner sind als die Einhüllende der Brennstäbe in der Brennelementkassette und dadurch, daß die Wände, die die Zellen trennen, Anschlagsmittel (28c, 28d) aufweisen, die in die Richtung vorstehen, in die der Flügel (26) der entsprechenden Zelle geneigt ist.

## Claims

1. A mixing grid for a nuclear fuel assembly, comprising at least two sets of crossed plates fixed together at their cross-points, defining cells some for receiving fuel rods and the others for receiving guide tubes, provided with coolant stirring fins (26) extending the plates downstream and angularly disposed to deflect the coolant transversely to its general flow direction, each plate being provided with abutment means projecting inwardly from each of the sides of those cells which are to receive fuel rods, defining a passage that is larger than the size of the rods but small enough to prevent a rod contained in the cell coming ito contact with the fins, the abutment means comprising, in each wall separating two inner cells receiving fuel rods, two plate portions that are cut out and deformed, mutually offset in the coolant flow direction, whose projections are in opposite directions,
characterized in that said portions are scoop-shaped (28,28a,28b,28c) and each open on only one axial side for causing coolant to pass from one cell to another.

2. A grid according to claim 1,
characterized in that the scoop-shaped abutment means are constituted by approximately semi-circular zone deformations of the plates, which open either into an edge of the plate or via a slot formed in the plate transversely to the flow direction.

3. A grid according to claim 2,
characterized in that the scoops are generally in the form of half truncated cones.

4. A grid according to any one of the preceding claims,
characterized in that the scoops which are mutually offset in the coolant flow direction occupy a fraction only on the width of the respective plate.

5. A grid according to any one of claims 1-4,
characterized in that the two scoops (28,30) each have a semi-circular base on their downstream size and in that the downstream scoop is defined by a slot (32) cut out in the plate while the upstream scoop (30) is terminated by a deformed portion of the upstream edge of the plate, the downstream scoop (28) projecting in a direction with respect to the plate which is opposite to the direction into which the fin (26) carried by the same wall of the cell is sloped.

6. A grid according to any one of claims 1-5,
characterized in that the downstream scoop (28a) opens in a direction opposite to that of the upstream scoop (30a) and extends up to the downstream edge of the plate, the downstream scoop projecting from the plate in a direction opposite to the direction into which the fin (26) carried by the same wall of the cell is sloped.

7. A grid according to any one of claims 1-5,
characterized in that the openings of the two scoops (28,30b) are mutually confronting and are separated from each other by a slot (32b).

8. A grid according to any one of the preceding claims,
characterized in that it is devoid of peripheral belt, in that the plates are of such a length that they have a virtual envelope smaller than the virtual envelope of the fuel rods in the assembly, and in that the walls separating the outermost cells include abutment means (28c,28d) projecting from that side of the plate towards which the fin (26) of the respective cell is sloped.
